# EUROPEAN PATENT APPLICATION

(11) **EP 1 108 596 A2**
(43) Date of publication of application: **20.06.2001**
(21) Application number: 00204523.5
(22) Date of filing: 14.12.2000
(51) Int. Cl.: B60K 15/03

(54) **Permeation barrier fuel tank**

(30) Priority: 18.12.1999 US 172556 P; 30.08.2000 US 651414
(71) Applicant: Delphi Technologies, Inc., Troy, MI 48007 (US)
(72) Inventor: Short, William T., Southfield, MI 48076 (US)
(74) Representative: Denton, Michael John

(57) **Abstract**

A hot melt seam sealer (35) for a fuel tank (10) having a seam includes a core (36) of a heat meltable barrier polymer providing permeation resistance to hydrocarbon, alcohol or mixed alcohol-hydrocarbon fuels. The hot melt seam sealer (35) also includes a meltable adhesive layer (38) capable of binding with the barrier polymer and a surface of the fuel tank (10). Also, a permeation barrier fuel tank (10) for a vehicle includes a tank shell (12) having a wall formed from a plurality of layers (30,32,34). The layers (30,32,34) include at least an inner layer (30), an outer layer (34), a fuel permeation barrier layer (32) disposed between the inner layer (30) and the outer layer (34), and the hot melt seam sealer (35) is disposed over the outer layer (34) at a seam area of the fuel tank (10).

## Description

### TECHNICAL FIELD

The present invention relates generally to fuel tanks for vehicles and, more particularly, to a permeation barrier fuel tank for a vehicle.

### BACKGROUND OF THE INVENTION

It is known to provide a fuel tank such as a plastic fuel tank in a vehicle to hold fuel to be used by an engine of the vehicle. In some vehicles, the plastic fuel tank is formed by blow-molding or thermoforming.

All blow-molded or thermoformed plastic fuel tanks contain seams where the opposite sides of the fuel tank are pinched together and sealed. In current multi-layer plastic fuel tanks, the seam area is generally the site of excessive permeation, because the barrier layer is highly thinned and often discontinuous in the seam. With polyethylene walled fuel tanks, applying a sealer to the seam is problematic, since few appropriate materials will adhere to this plastic. However, there is concern that the permeation barrier is found to thin out or become discontinuous at the seam during manufacturing.

One commercial approach to resolve this concern is to thicken the seam of the fuel tank, which increases the weight, cost, and may reduce impact resistance of the fuel tank. Another commercial approach is to add metal sheets or shields to the fuel tank, which increases the weight and cost of the plastic fuel tank.

Therefore, it is desirable to provide a fuel tank for a vehicle that has a more effective fuel permeation barrier to prevent evaporative emissions. It is also desirable to provide a permeation barrier fuel tank for a vehicle that significantly reduces evaporative emissions, weight, and cost of the fuel tank. It is further desirable to provide a hot melt seam sealer to a fuel tank.

### SUMMARY OF THE INVENTION

It is, therefore, one object of the present invention to provide a new hot melt seam sealer for blow molded or thermoformed plastic fuel tanks or other similar container vessels.

It is another object of the present invention to provide a new permeation barrier fuel tank or other similar container vessel, in which the seam areas are covered and protected from permeation by a hot melt seam sealer.

It is yet another object of the present invention to provide a fuel tank that significantly reduces evaporative emissions without unduly increasing weight and cost.

It is a further object of the present invention to provide a permeation barrier fuel tank that has an additional barrier layer deposited over the seam of the fuel tank.

To achieve the foregoing objects, the present invention is a hot melt seam sealer for a fuel tank having a seam including a core of a heat meltable barrier polymer providing permeation resistance to hydrocarbon, alcohol or mixed alcohol-hydrocarbon fuels. The hot melt seam sealer also includes a meltable adhesive layer capable of binding with the barrier polymer and a surface of the fuel tank.

Also, the present invention is a permeation barrier fuel tank for a vehicle including a tank shell having a wall formed from a plurality of layers. The layers include at least an inner layer, an outer layer, a fuel permeation barrier layer disposed between the inner layer and the outer layer, and a hot melt seam sealer disposed over the outer layer at a seam area of the fuel tank.

One advantage of the present invention is that a permeation barrier fuel tank is provided for a vehicle that has an additional barrier layer deposited over just those spots where the internal barrier is thinnest and weakest, thereby reducing fuel permeation leading to less evaporative emissions. Another advantage of the present invention is that the permeation barrier fuel tank incorporates a hot melt seam sealer to significantly reduce fuel permeation losses from the plastic fuel tank through the seam area. Yet another advantage of the present invention is that the permeation barrier fuel tank significantly improves barrier properties and increases the effectiveness of the fuel tank with a wider range of fuel compositions, e.g., gasohol, methanol, and hydrocarbon blends. Still another advantage of the present invention is that the permeation barrier fuel tank maintains low weight, ease of design and shaping.

Other objects, features, and advantages of the present invention will be readily appreciated, as the same becomes better understood, after reading the subsequent description taken in conjunction with the accompanying drawings.

### BRIEF DESCRIPTION OF THE DRAWINGS

Figure 1 is a perspective view of a permeation barrier fuel tank, according to the present invention.

Figure 2 is a sectional view taken along line 2-2 of Figure 1.

Figure 3 is a view similar to Figure 2 after sealing the tank seam area.

### DESCRIPTION OF THE PREFERRED EMBODIMENT

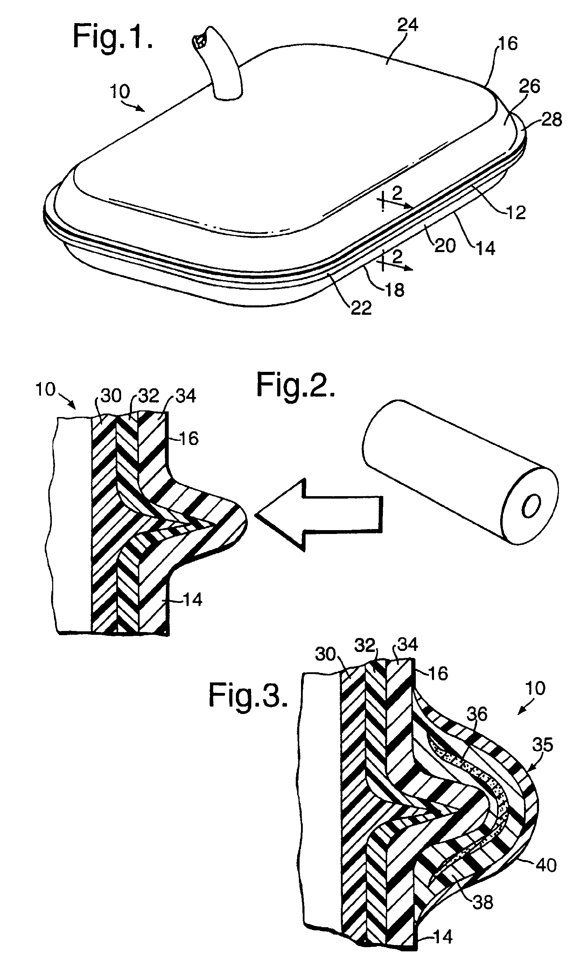

Referring to the drawings and in particular Figures 1 and 2, one embodiment of a permeation barrier fuel tank 10, according to the present invention, is shown for a vehicle (not shown). The permeation barrier fuel tank 10 includes a tank shell 12. In this embodiment illustrated, the tank shell 12 is of a generally rectangular type. The tank shell 12 includes a first or lower half shell 14 and a second or upper half shell 16. The lower half shell 14 has a base wall 18 and a side wall 20 around a periphery of the base wall 18 and extending generally perpendicular thereto. The side wall 20 has a flange 22 extending outwardly and generally perpendicular thereto. The upper half shell 16 has a base wall 24 and a side wall 26 around a periphery of the base wall 24 and extending generally perpendicular thereto. The side wall 26 has a flange 28 extending outwardly and generally perpendicular thereto. The flanges 22 and 28 of the lower half shell 14 and upper half shell 16, respectively, are joined together to form a seam by suitable means such as by thermoforming, compression molding or friction welding. The lower half shell 14 and upper half shell 16 are made of a rigid material such as a thermoformable plastic.

Referring to Figures 1 and 2, the permeation barrier fuel tank 10 has the base walls 18,24, side walls 20,26, and flanges 22,28 formed from a plurality of layers 30,32,34. The first or inner layer 30 is made from a thermoformable polymer such as a high-density polyethylene (HDPE) or similar polyolefin, which is a conventional material known in the art. The first layer 30 has a predetermined thickness of approximately two millimeters (2.00 mm). The second layer 32 is a fuel barrier layer made from a hydrocarbon barrier material such as ethylene vinyl alcohol (EVOH) copolymer, which is a conventional material known in the art. The second layer 32 has a predetermined thickness of approximately 0.1 mm to approximately 1.0 mm. The third or outer layer 34 is made from a thermoformable polymer such as a high-density polyethylene (HDPE) or similar polyolefin, which is a conventional material known in the art. The third layer 34 has a predetermined thickness of approximately two millimeters (2.00 mm).

The permeation barrier fuel tank 10 includes a hot melt seam sealer, according to the present invention and generally indicated at 35, disposed over the seam area of the fuel tank 10. The hot melt seam sealer 35 includes a second barrier layer 36 with barrier properties to improve permeation resistance to alcohol or mixed alcohol-hydrocarbon type fuels. The second barrier layer 36 is made from a hydrocarbon barrier material such as ethylene vinyl alcohol (EVOH) copolymer or a polyamide, which is a conventional material known in the art, or a fluorocarbon copolymer, which is a conventional material known in the art. The second barrier layer 36 has a predetermined thickness of approximately 0.1 mm to approximately 1.0 mm. The hot melt seam sealer 35 also includes a tie or adhesive layer 38 to attach the second barrier layer 36 to an outer surface of the outer layer 34. The adhesive layer 38 is made from an adhesive such as a thermoplastic polyolefin modified, for example, with carboxylate or carboxylate derivatives, to provide adhesion to the barrier resin, which is a conventional material known in the art. The adhesive layer 38 has a predetermined thickness of approximately 0.05 mm to approximately 0.5 mm. The hot melt seam sealer 35 may include a cover layer 40 to be at least partially disposed over the adhesive layer 38. The cover layer 40 is made from a thermoformable polymer such as a high-density polyethylene (HDPE) or similar polyolefin, which is a conventional material known in the art. The cover layer 40 has a predetermined thickness such as 0.07 mm. It should be appreciated that the second barrier layer 36 added to the seam area of the fuel tank 10 ensures the presence of a continuous, unbroken seal over the vulnerable seam area.

In manufacturing the permeation barrier fuel tank 10, several conventional processes may be used. Preferably, the permeation barrier fuel tank 10 is formed by a conventional thermoforming process. The permeation barrier fuel tank 10 has the layers 30,32,34 simultaneously co-extruded to form a fuel tank sheet which is vacuum formed into two shells that are fused together in a mold. The hot melt seam sealer 35 contains a heat meltable inner core of the second barrier layer 36, surrounded by the meltable adhesive layer 38 and may contain a partial or incomplete cover layer 40. The hot melt seam sealer 35 is applied by heating the components thereof to a molten state, then forcing the molten mixture in a laminar flow onto the seam area of the fuel tank 10 by suitable means such as a hot melt applicator so that the modified polyethylene is in direct contact with, and overlaps, the seam area as illustrated in Figure 3. It should be appreciated that the hot melt sealer 35 adheres well to the fuel tank 10 and provides permeation resistance. It should also be appreciated that the hot melt seam sealer 35 may be applied and adhered to the seam area of blow molded or thermoformed plastic fuel tanks or other similar container vessels.

The present invention has been described in an illustrative manner. It is to be understood that the terminology, which has been used, is intended to be in the nature of words of description rather than of limitation.

Many modifications and variations of the present invention are possible in light of the above teachings. Therefore, within the scope of the appended claims, the present invention may be practiced other than as specifically described.

## Claims

1. A permeation barrier fuel tank (10) for a vehicle comprising:
a tank shell (12) having a wall formed from a plurality of layers (30,32,34);
said layers (30,32,34) comprising at least an inner layer (30), an outer layer (34), a fuel permeation barrier layer (32) disposed between said inner layer (30) and said outer layer (34); and
a hot melt seam sealer (35) disposed over said outer layer (34) at a seam area of the fuel tank (10).

2. A permeation barrier fuel tank (10) as set forth in claim 1 wherein said fuel permeation barrier layer (32) is made of a hydrocarbon barrier material.

3. A permeation barrier fuel tank (10) as set forth in claim 1 wherein said inner layer (30) and said outer layer (34) are made of a polyethylene material.

4. A permeation barrier fuel tank (10) as set forth in claim 1 wherein said hot melt seam sealer (35) includes a second fuel permeation barrier layer (36).

5. A permeation barrier fuel tank (10) as set forth in claim 4 wherein said second fuel permeation barrier layer (36) is made of an alcohol barrier material.

6. A permeation barrier fuel tank (10) as set forth in claim 4 wherein said hot melt seam sealer (35) includes an adhesive layer (38) surrounding said second fuel permeation barrier layer (36).

7. A permeation barrier fuel tank (10) as set forth in claim 6 wherein said adhesive layer (38) comprises a modified polyolefin material.

8. A permeation barrier fuel tank (10) as set forth in claim 6 wherein said hot melt seam sealer (35) includes a cover layer (40) disposed over said adhesive layer (38).

9. A permeation barrier fuel tank (10) as set forth in claim 8 wherein said adhesive layer (38) is disposed between said outer layer (34) and said second permeation barrier layer (36) and said cover layer (40).

10. A permeation barrier fuel tank (10) as set forth in claim 1 wherein said hot melt seam sealer (35) overlaps the seam area of the fuel tank (10).

11. A permeation barrier fuel tank (10) as set forth in claim 1 wherein said hot melt seam sealer (35) is continuous about the seam area of the fuel tank (10).

12. A permeation barrier fuel tank (10) for a vehicle comprising:
a tank shell (12) having a wall formed from a plurality of layers (30,32,34);
said layers (30,32,34) comprising at least an inner layer (30), an outer layer (34), a first fuel permeation barrier layer (32) disposed between said inner layer (30) and said outer layer (34); and
a hot melt seam sealer (35) including a second fuel permeation barrier layer (36) disposed over said outer layer (34) at a seam area of the fuel tank (10).

13. A permeation barrier fuel tank (10) as set forth in claim 12 wherein said first fuel permeation barrier layer (32) is made of a hydrocarbon barrier material.

14. A permeation barrier fuel tank (10) as set forth in claim 12 wherein said inner layer (30) and said outer layer (34) are made of a polyethylene material.

15. A permeation barrier fuel tank (10) as set forth in claim 12 wherein said second fuel permeation barrier layer (36) is made of a hydrocarbon barrier material.

16. A permeation barrier fuel tank (10) as set forth in claim 12 wherein said hot melt seam sealer (35) includes an adhesive layer (38) surrounding said second fuel permeation barrier layer (36).

17. A permeation barrier fuel tank (10) as set forth in claim 16 wherein said adhesive layer (38) comprises a modified polyolefin material.

18. A permeation barrier fuel tank (10) as set forth in claim 16 wherein said hot melt seam sealer (35) includes a cover layer (40) disposed over said adhesive layer (38).

19. A permeation barrier fuel tank (10) as set forth in claim 16 wherein said adhesive layer (38) is disposed between said outer layer (34) and said second permeation barrier layer (36) and said cover layer (40).

20. A fuel tank (10) for a vehicle comprising:
a tank shell (12) having a wall formed from a plurality of layers (30,32,34);
said layers (30,32,34) comprising at least an inner layer (30) and an outer layer (34) comprising a polyethylene material, and a first fuel permeation barrier layer (32) comprising a hydrocarbon barrier material disposed between said outer layer (34) and said inner layer (30); and
a hot melt seam sealer (35) comprising a second fuel permeation barrier layer (36) comprising a hydrocarbon barrier material and an adhesive layer (38) surrounding said second fuel permeation barrier layer (36) and disposed over said outer layer (34) at a seam area of the fuel tank (10).

21. A hot melt seam sealer (35) for a fuel tank (10) having a seam comprising:
a core (36) of a heat meltable barrier polymer providing permeation resistance to hydrocarbon, alcohol or mixed alcohol-hydrocarbon fuels; and
a meltable adhesive layer (38) capable of binding with said barrier polymer and a surface of the fuel tank (10).

22. A hot melt seam sealer (35) as set forth in claim 21 wherein said adhesive layer (38) surrounds said core (36).

23. A hot melt seam sealer (35) as set forth in claim 21 wherein said adhesive layer (38) comprises a modified polyolefin material.

24. A hot melt seam sealer (35) as set forth in claim 21 including a cover layer (40) at least partially disposed over said adhesive layer (38).

25. A hot melt seam sealer (35) as set forth in claim 24 wherein said cover layer (40) is made of either one of a high density polyethylene material or polyolefin material.
